**Europäisches Patentamt**

**European Patent Office**

**Office européen des brevets**

(11) Veröffentlichungsnummer: **0 022 248**
A1

(12) # EUROPÄISCHE PATENTANMELDUNG

(21) Anmeldenummer: 80103779.7

(22) Anmeldetag: 03.07.80

(51) Int. Cl.³: **F 16 L 23/04**
F 16 B 11/00, E 21 D 11/38

(30) Priorität: 04.07.79 DE 2927040

(43) Veröffentlichungstag der Anmeldung:
14.01.81 Patentblatt 81/2

(84) Benannte Vertragsstaaten:
AT BE CH FR GB IT LI NL SE

(71) Anmelder: Schaefer, Rudolf
Brauerstrasse 35
D-4100 Duisburg 1(DE)

(72) Erfinder: Schaefer, Rudolf
Brauerstrasse 35
D-4100 Duisburg 1(DE)

(74) Vertreter: Dipl.-Ing. W. Cohausz Dipl.-Ing. R. Knauf
Dipl.-Ing. H.B. Cohausz
Dipl.-Ing. D.H. Werner Patentanwälte Schumannstrasse
97
D-4000 Düsseldorf(DE)

(54) Aus einzelnen Elementen zusammensetzbarer Hohlkörper.

(57) Die Erfindung betrifft einen Hohlkörper, der aus einzelnen Elementen (1,2) zusammengesetzt ist und insbesondere als Rohr oder Tunnel verwendbar ist. Im Bereich der stirnseitigen Verbindungsflächen sind Nut-Feder-Verbindungen ausgebildet, deren Federn (4) Flanken aufweisen, die sich jeweils mit zunehmendem Abstand vom Federfuß einander nähern, und deren Nuten (3) an die Federn (4) angepaßt ausgeführt sind. An den Stirnseiteiten von Elementabschnitten (1,2) sind an der Außen- und/oder Innenseite Flansche (9a,9b) angeordnet, die jeweils an der von der Stirnfläche abgewandten Seite eine Schräge Fläche (10) aufweisen, so daß die Flanschbreite zum Fuß des Flansches hin zunimmt. Der an diese Stirnseite anlegbare Elementabschnitt (2) weist einen ähnlich oder gleich geformten Flansch (9b) auf, und jeweils zwei Flansche (9a,9b) zweier Elementabschnitte (1,2) werden von einem Ring (11) übergriffen, der einen inneren Ringkanal aufweist, dessen Seitenränder (12) beide Flansche (9a,9b) klammerförmig übergreifen und im unbelasteten Zustand voneinander einen geringeren Abstand aufweisen, als der Abstand der Fußpunkte der beiden schrägen Flächen (10) voneinander.

Fig.1

EP 0 022 248 A1

Rudolf Schaefer

Brauerstr. 35

4100 Duisburg 1

Aus einzelnen Elementen zusammensetzbarer Hohlkörper

Die Erfindung betrifft einen aus einzelnen Elementen zusammensetzbaren Hohlkörper, insbesondere Rohr oder Tunnel, mit im Bereich der stirnseitigen Verbindungsflächen ausgebildeten Nut-Feder-Verbindungen, deren Federn Flanken aufweisen, die sich jeweils mit zunehmendem Abstand vom Federfuß einander nähern, und deren Nuten an die Federn angepaßt ausgeführt sind.

Ein derartiger Körper ist aus der europäischen Offenlegungsschrift 1 836 bekannt. Bei diesem bekannten Hohlkörper wird der die Elemente aneinanderpreßbare Druck durch ein Spannband erreicht, das rechtwinklig zu den Verbindungsflächen bzw. parallel zu den Druckkräften verläuft und den gesamten Körper umfaßt. Bei Körpern größerer Länge werden hierdurch große Bandlängen erforderlich, und bei Rohrleitungen oder Tunneln ist ein Umfassen des Hohlkörpers in Längsrichtung nicht möglich. Ferner läßt diese bekannte Verbindung nur eine sehr begrenzte Beweglichkeit der Elemente zueinander zu.

33 244
HC/Be

- 2 -

Aufgabe der Erfindung ist es, die Verbindung einzelner, zu einem Hohlkörper zusammensetzbarer Elemente aneinander derart zu verbessern, daß man mit Spannvorrichtungen geringer Länge und Größe auskommt. Darüber hinaus ist es Aufgabe der Erfindung, Elemente der eingangs genannten Art derart zu verbessern, daß sie bei einfachster Konstruktion zueinander eine große Beweglichkeit bei einer hohen Dichtigkeit besitzen.

Diese Aufgaben werden erfindungsgemäß dadurch gelöst, daß an den Stirnseiten von Elementabschnitten an der Außen- und/oder Innenseite Flansche angeordnet sind, die jeweils an der von der Stirnfläche abgewandten Seite eine schräge Fläche aufweisen, so daß die Flanschbreite zum Fuß des Flansches hin zunimmt, daß der an diese Stirnseite anlegbare Elementabschnitt einen ähnlich oder gleich geformten Flansch aufweist, und daß jeweils zwei Flansche zweier Elementabschnitte von einem Ring übergriffen werden, der einen inneren Ringkanal aufweist, dessen Seitenränder beide Flansche klammerförmig übergreifen und im unbelasteten Zustand voneinander einen geringeren Abstand aufweisen, als der Abstand der Fußpunkte der beiden schrägen Flächen voneinander.

Hierdurch bleiben die Spannbänder in Form von Ringen direkt an der Verbindungsstelle und erzeugen bei geringen Außenabmessungen und Längen auf den Schrägflächen der Flansche einen ausreichenden Druck, um die Stirnseiten der Elemente aneinander zu halten. Diese Befestigungsweise ist aufgrund des geringen konstruktiven Aufwandes preiswert

- 3 -

und ist leicht zu handhaben. Eine hohe Dichtigkeit wird
dadurch erreicht, daß zusätzlich zu Nut und Feder der
Ring abdichtend wirkt. Da der Ring nachgiebig gestaltet
ist, wird bei einer entsprechenden Ausbildung von Nut
und Feder eine hohe Beweglichkeit der Elemente zueinander erreicht.

Insbesondere bei Rohrleitungen kann der Ring an den
Außenseiten der Hohlkörper anliegen und durch eine Spannvorrichtung zusammenziehbar sein, die von außen leicht
zu erreichen ist.

Hierdurch lassen sich Rohrverbindungen schaffen, die:

1. sich ohne Facharbeiter beliebig oft ohne Verschleißerscheinungen montieren lassen,

2. eine absolute Gas-, Vakuum- und Wasserdruckdichtigkeit gewährleisten,

3. selbstzentrierende Verbindungen der Rohre zueinander
   ermöglichen,

4. ohne Beeinträchtigung der Dichtigkeit an den Verbindungsstellen begrenzt beweglich (flexibel) bleiben

5. und eine einfache, sichere sowie dichte Muffenteilmontage an den Rohrenden erzielen.

Alternativ oder zusätzlich kann bei innerem Flansch der
Ring auch an den Innenseiten der Hohlkörper anliegen
und durch eine Druckvorrichtung auseinanderdrückbar
sein. Dies bietet sich besonders beim Tunnelbau an.

– 3a –

Vorzugsweise wird vorgeschlagen, daß der Ring zwei- oder
mehrfach geteilt ist und die Teile insbesondere durch
Haken aneinander befestigbar sind. Hierdurch ist der
Ring leicht handhabbar und platzsparend vor der Montage
aufzubewahren. Auch läßt er sich hierdurch leicht in
das Innere eines Tunnels einbringen.

Die Dichtigkeit des Ringes als auch seine Haltefunktion
werden dadurch verbessert, daß der innere Hohlraum des
Ringes nach seinem Anliegen am Hohlkörper mit einer
erhärtbaren und/oder dauerelastischen Masse füllbar
ist. Wird eine dauerelastische Masse gewählt, so bleibt
weiterhin eine hohe Beweglichkeit der Elemente zueinander erhalten.

-4-

Eine hohe Beweglichkeit der Elemente zueinander bei
ausreichender Dichtigkeit wird dadurch erreicht, daß
im zusammengesetzten Zustand zwischen Nut und Feder
mindestens ein Hohlraum besteht, der mit einer erhärtbaren und/oder dauerelastischen Masse füllbar oder in
den mindestens ein elastisches Band einbringbar ist.
Auch kann im Boden jeder Nut ein elastisches Band
einliegen, an das der Rücken der Feder zur Anlage gelangt.

Ferner wird vorgeschlagen, daß Nut und/oder Feder von
Profilen gebildet werden, die an den Stirnseiten der
Elemente ein- oder ansetzbar sind. Hierdurch wird eine
hohe Fertigungsgenauigkeit der Verbindungsstelle als
auch eine konstruktive Vereinfachung der Elemente erreicht, da die Elemente selber keine exakt ausgeführten
Nuten oder Federn aufweisen müssen, die der entsprechenden Nut oder Feder des anderen Elementes angepaßt
sind.

Die Profile lassen sich besonders leicht durch Nut und
Feder in den Stirnseiten der Elemente befestigen und
können aus elastischem Material bestehen, wodurch sie
leicht herstellbar sind und eine hohe Dichtigkeit erreichen können.

Bei größeren Hohlkörpern, wie z.B. einem Tunnel, sind
die Elemente besonders dann leicht transportierbar,
lagerbar und einsetzbar, wenn sie aus mehreren Schalen,
insbesondere Halbschalen, zusammengesetzt sind.

Durchgehende Nut- und Federverbindungen auch in den

- 5 -

Eckbereichen werden dadurch erreicht, daß im Bereich
der Ecken der Schalen die Feder einer Stirnfläche in
eine Nut einer Trennfläche und die Nut einer Stirnfläche in eine Feder einer Trennfläche übergeht. Hierdurch wird nicht nur die Dichtigkeit verbessert, sondern
auch erreicht, daß nach dem Zusammensetzen der Schalen
an den Stirnseiten der Elemente die Nuten und Federn
ohne Wechsel durchgehend verlaufen. Dabei wird vorgeschlagen, daß diese Übergänge in einem Winkel von
45 Grad zu den Nuten und Federn verlaufen.

Eine Erhöhung der Stabilität bei Verwendung von Schalen
wird dadurch erreicht, daß die Elemente derart zusammengesetzt sind, daß die Trennfugen eines Elementes
zu denen des anliegenden Elementes versetzt angeordnet
sind.

Ausführungsbeispiele der Erfindung sind in den Zeichnungen dargestellt und werden im folgenden näher beschrieben. Es zeigen:

Fig. 1        einen Längsschnitt durch die Verbindungsstelle zweier aneinander zu befestigender
              Rohrelemente im auseinandergeschobenen
              Zustand, wobei im oberen Bereich eine
              andere Verbindung gezeigt ist als im unteren;

Fig. 2        einen Schnitt nach Fig. 1 im zusammengesetzten Zustand mit aufgesetztem Ring;

- 5a -

Fig. 3    einen Schnitt entsprechend Fig. 2, wobei die
Nuten und Federn von Profilen gebildet werden,
die getrennt von den Elementen hergestellt sind;

Fig. 4    einen Querschnitt durch ein Rohr mit aufgesetztem Ring und Spannvorrichtung.

Fig. 5    einen Längsschnitt durch zwei Rohre mit innerem
Ring; und

Fig. 6    eine perspektivische Ansicht eines aus zwei
Halbschalen gebildeten Rohres.

- 6 -

Fig. 7   eine perspektivische Ansicht eines aus drei
         Halbschalen gebildeten Rohres;

Fig. 8   den Ausschnitt A aus Fig. 7 im zusammengesetzten
und 9    und auseinandergenommenen Zustand;

Fig. 10  die linke Hälfte eines Schnittes durch zwei
         aneinander befestigte Rohre mit stirnseitig
         aufgesetzten Befestigungsringen.

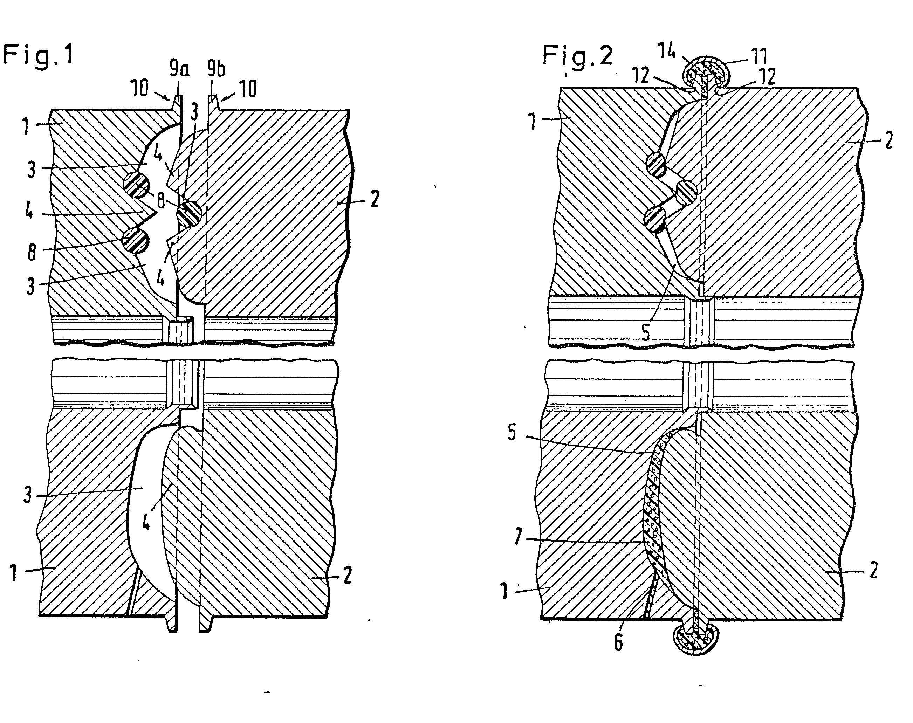

Wie in den Figuren 1 und 2 im unteren Teil gezeigt, weist
ein Rohrabschnitt 1 stirnseitig eine koaxiale gewölbte
Ringnut 3 auf, in die eine ähnlich gewölbte ringförmige
Feder 4 eingreift, die an der Stirnseite eines Rohrabschnittes 2 angeformt ist, der am Rohrabschnitt 1 befestigt wird. Im zusammengesetzten Zustand der beiden
Rohrabschnitte 1 und 2 besteht zwischen den Oberflächen
von Nut 3 und Feder 4 ein Zwischenraum 5, in den über
einen von der Bohrung gebildeten Kanal 6 eine erhärtbare
und/oder dauerelastische Masse eingepreßt wurde. Die
Oberflächen von Nut und Feder sind derart gekrümmt, daß
eine begrenzte Bewegung der Rohrabschnitte 1 und 2
zueinander möglich ist.

Während in dem in den Figuren 1 und 2 gezeigten unteren
Ausführungsbeispiel die Stirnseiten nur eine einzige
Nut und eine einzige Feder aufweisen, sind bei dem in
den Figuren 1 und 2 gezeigten oberen Ausführungsbeispiel an der Stirnseite des Rohrabschnitts 1 eine Feder
4 und zwei Nuten 3, und an der Stirnseite des Rohrschnitts 2 zwei Federn 4 und eine Nut 3 angeordnet.
Wiederum sind Federn und Nuten so geformt, daß eine
begrenzte Bewegung der Rohrabschnitte zueinander möglich ist, und ferner bilden sie miteinander einen Zwischenraum 5, in dem drei dauerelastische Bänder 8 einliegen, die sich auf dem Grund der Nuten 3 befinden,
so daß sich die Rücken der Federn 4 in diese Bänder
eindrücken können. Die Stirnflächen beider Rohrabschnitte 1 und 2 sind jeweils durch ringförmige Flansche 9a und 9b nach außen vergrößert, die nach einem
Zusammensetzen der Rohrabschnitte aneinander liegen
können. Jeder Flansch weist auf der der Stirnseite
abgewandten Seite eine schräge Fläche 10 auf, so daß
die Flansche im Querschnitt keilförmig sind und sich
zum Flanschfußpunkt hin erweitern. Nach dem Zusammensetzen der Rohrabschnitte aneinander wird über beide
Flansche ein Ring 11 gesetzt, der einen etwa kreisrohrförmigen Querschnitt aufweist und an der Innenseite einen ringförmigen Schlitz besitzt, durch den
die Flansche 9a und 9b in das Innere des Ringes 11
hineinreichen. Die Seitenränder 12 dieses Spaltes
liegen an den Flächen 10 der Flansche an und weisen
einen Abstand auf, der kleiner ist als der Abstand
der Fußpunkte der Flächen 10 im zusammengesetzten Zustand der Rohrabschnitte.

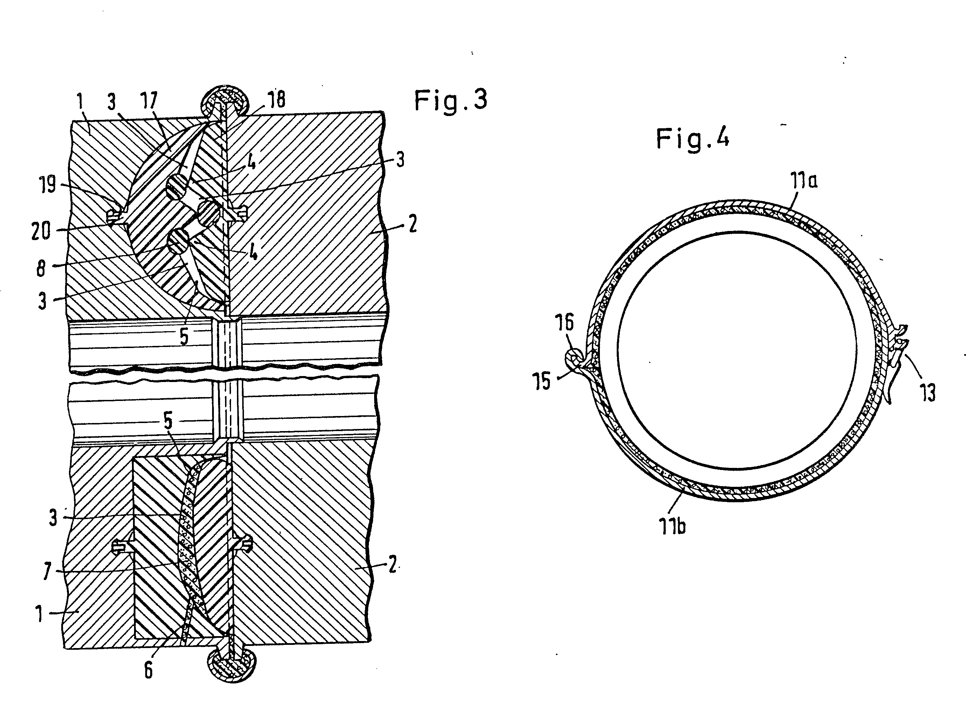

Wird der Ring 11 durch die in Fig. 4 gezeigte Spannvorrichtung 13 zusammengezogen, so gleiten die Seitenränder 12 entlang der Flächen 10 nach innen in Richtung der Fußpunkte, und die Rohrabschnitte 1 und 2
werden aneinander axial gedrückt. In den Ring 11 kann
durch eine nicht gezeigte Öffnung eine erhärtbare und/
oder dauerelastische Masse 14 eingepreßt werden. Bei
dem in Fig. 4 gezeigten Ausführungsbeispiel besteht
der Ring aus zwei Teilen 11a und 11b, die auf der
zur Spannvorrichtung gegenüberliegenden Seite durch
zwei Haken 15 und 16 (ineinanderhakend) aneinander
gehalten sind.

*- 8 -*

Bei dem Ausführungs beispiel nach Fig. 3 ist in die
Stirnfläche des Rohrabschnitts 1 ein Profil 17 aus
Kunststoff eingelassen, das auf der dem Rohrabschnitt
1 gegenüberliegenden Seite eine Nute bzw. zwei Nuten
und eine Feder bildet. Ein entsprechendes Profil 18
ist an der Stirnseite des Rohrabschnitts 2 befestigt,
das auch aus Kunststoff besteht und eine Feder bzw.
zwei Federn und eine Nut bildet. Die Profile 17 und
18 können angeklebt sein und zusätzlich oder alternativ durch Nut 19 und Feder 20 an den Stirnseiten der
Rohrabschnitte 1, 2 befestigt werden. Dabei kann die
Feder 20 durch Schnappsitz unlösbar in der Nut 19 befestigt sein.

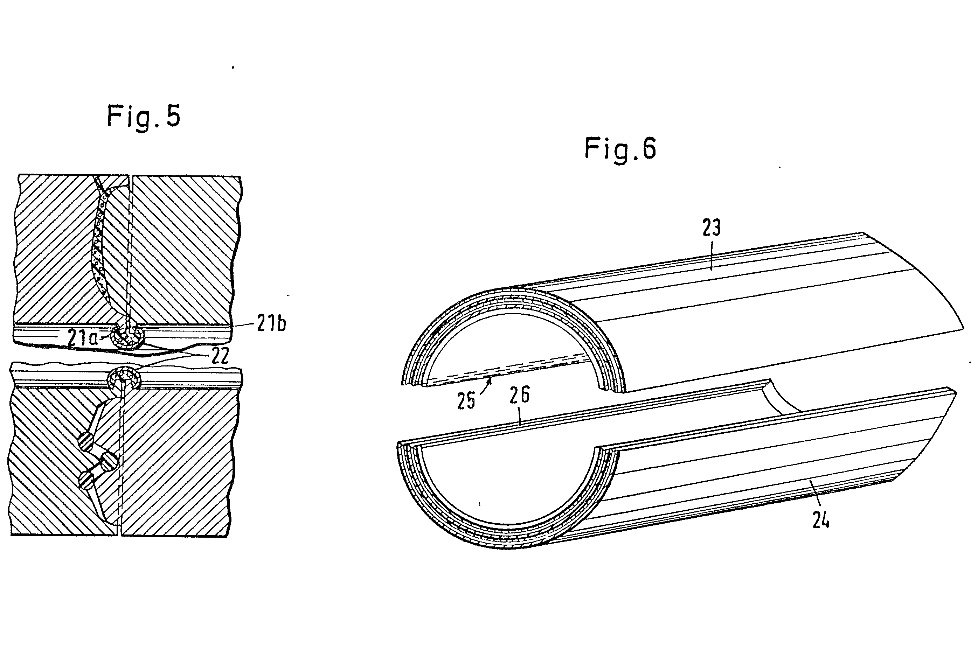

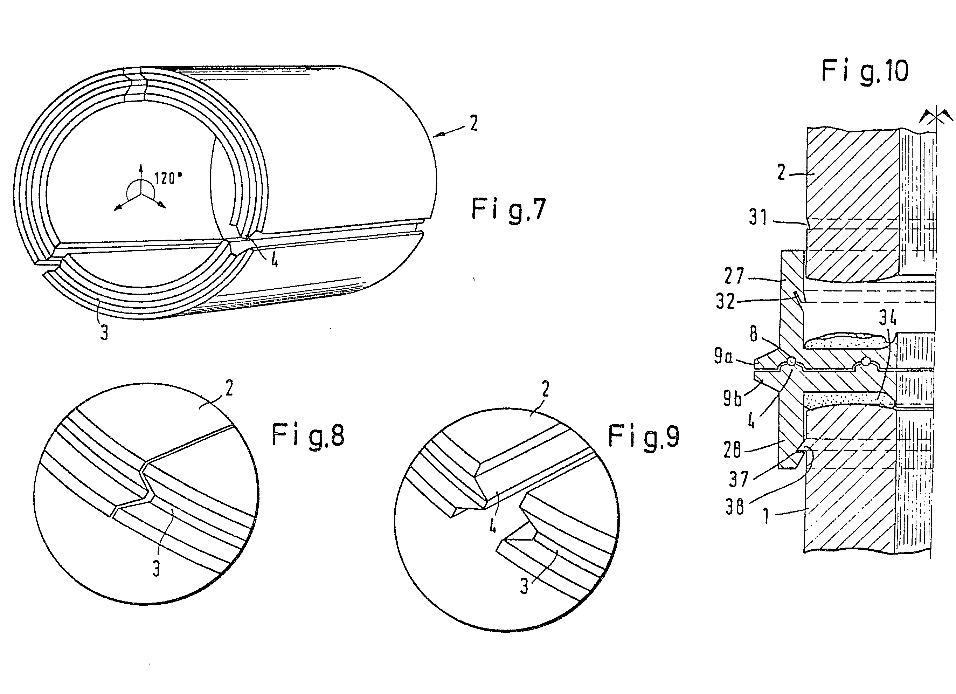

In den Figuren 5 und 6 bestehen die Rohrabschnitte aus
zwei Halbschalen, (23,24) deren Nuten und Federn nicht nur über
die Stirnflächen sondern auch über die Trennflächen 25,26
zwischen den Halbschalen verlaufen. Im Bereich der
Ecken dieser Schalen gehen die Federn einer Stirnfläche
in die Nuten einer Trennfläche über, und die Nuten
einer Stirnfläche gehen über in die Federn einer Trennfläche. Dabei verlaufen die Übergänge von den Federn
zu den Nuten und umgekehrt in einem Winkel von 45°.

Die in den Figuren 5 und 6 gezeigte Ausführung eignet
sich besonders für den Tunnelbau, da die Flansche 21a
und 21b im Gegensatz zu den Figuren 1 bis 3 nicht außen
sondern innen an den Rohrabschnitten 1, 2 bzw. Tunnelabschnitten angeformt sind, so daß von innen auf die
Flansche ein                    Ring 22 aufgesetzt werden
kann, der durch eine Vorrichtung auseinandergedrückt
wird. Hierdurch werden die Stirnflächen der aneinander
anliegenden Rohrabschnitte 1 und 2 aneinandergedrückt.

- 9 -

Nach Einpressen der dauerelastischen Masse kann der
Ring 11 (Felge) etwas gelockert werden, um die Beweglichkeit der Elemente zueinander zu erhöhen. Deshalb
kann die Spannvorrichtung, wie in Fig. 4 gezeigt, in
zwei Stellungen bringbar sein. Eine ausreichende
Dichtigkeit ist dann aber immer noch durch die elastische Masse gegeben.

Entsprechend Fig. 7 kann ein Rohr auch aus drei Schalen
bestehen, die durch achsparallele Nuten und Federn
aneinandergesetzt sind. Dabei kann entsprechend Fig.7
jede Schale an den Trennflächen bzw. an den aneinanderzusetzenden Flächen nur eine Feder 4 bzw. Nut 3 aufweisen.

Die Nuten und Federn können auch von auf die Stirnseiten der Rohre aufgesetzten Ringen 27, 28 oder entsprechend der Aufteilung des Rohres in Schalen von
Ringsegmenten gebildet werden. Zwischen diesen Ringen
oder Ringsegmenten und den Stirnseiten der Rohre kann
eine Abdichtmasse 34 eingebracht sein. Die Ringe 27,
28 oder Ringsegmente umfassen die Rohre 1, 2 seitlich
und sind an den Rohrmänteln sägezahnförmig einrastend
befestigt. Hierzu weist entweder der Rohrmantel einen
außen vorspringenden sägezahnförmigen Ring 38 auf, der
in eine entsprechend geformte Nut 37 des Ringes 28 eingreift, oder aber der Ring 27 weist einen ringförmigen
Vorsprung 32 innen auf, der in eine Ringnut 31 außen
am Rohrmantel einrastet. Dabei kann der ringförmige
Vorsprung 32 hinterschnitten sein, um federnd zurückgebogen werden zu können. Die sägezahnförmige Nut 31 kann
an der Montagestelle leicht von Hand in das Rohr außen
eingefräst werden.

Die Nuten und Federn können bei allen Ausführungsbeispielen im Querschnitt rund sein. Hierdurch wird die zentrierende Wirkung von Nut und Feder verbessert.

– 10 –

Ansprüche

1. Aus einzelnen Elementen zusammensetzbarer Hohlkörper, insbesondere Rohr oder Tunnel, mit im Bereich der stirnseitigen Verbindungsflächen ausgebildeten Nut-Feder-Verbindungen, deren Federn Flanken aufweisen, die sich jeweils mit zunehmendem Abstand vom Federfuß einander nähern, und deren Nuten an die Federn angepaßt ausgeführt sind, d a d u r c h g e k e n n z e i c h n e t , daß an den Stirnseiten von Elementabschnitten (1, 2) an der Außen- und/oder Innenseite Flansche (9a, 9b) angeordnet sind, die jeweils an der von der Stirnfläche abgewandten Seite eine schräge Fläche (10) aufweisen, so daß die Flanschbreite zum Fuß des Flansches hin zunimmt, daß der an diese Stirnseite anlegbare Elementabschnitt (2) einen ähnlich oder gleich geformten Flansch (9b) aufweist, und daß jeweils zwei Flansche (9a, 9b) zweier Elementabschnitte (1, 2) von einem Ring (11) übergriffen werden, der einen inneren Ringkanal aufweist, dessen Seitenränder (12) beide Flansche klammerförmig übergreifen und im unbelasteten Zustand voneinander einen geringeren Ab-

33 244 EU
HC/Be

- 11 -

stand aufweisen, als der Abstand der Fußpunkte der beiden schrägen Flächen (10) voneinander.

2. Hohlkörper nach Anspruch 1, d a d u r c h  g e - k e n n z e i c h n e t , daß der Ring (11) an den Außenseiten der Hohlkörper anliegt (1, 2) und durch eine Spannvorrichtung (13) zusammenziehbar ist.

3. Hohlkörper nach Anspruch 1, d a d u r c h  g e - k e n n z e i c h n e t , daß bei inneren Flanschen der Ring an den Innenseiten der Hohlkörper anliegt und durch eine Druckvorrichtung auseinanderdrückbar ist.

4. Hohlkörper nach Anspruch 1, 2 oder 3, d a d u r c h  g e k e n n z e i c h n e t , daß der Ring (11) zwei- oder mehrfach geteilt ist und die Teile insbesondere durch Haken (15, 16) aneinander befestigbar sind.

5. Hohlkörper nach einem der Ansprüche 1 bis 4, d a - d u r c h  g e k e n n z e i c h n e t , daß der innere Hohlraum des Ringes (11) nach seinem Anliegen am Hohlkörper (1, 2) mit einer erhärtbaren und/oder dauerelastischen Masse (14) füllbar ist.

6. Hohlkörper nach einem der Ansprüche 1 bis 5, d a - d u r c h  g e k e n n z e i c h n e t , daß im zusammengesetzten Zustand zwischen Nut (3) und Feder (4) mindestens ein Hohlraum (5) besteht, der mit einer erhärtbaren und/oder dauerelastischen Masse (7) füllbar oder in den mindestens ein elastisches Band (8) einbringbar ist.

- 12 -

7. Hohlkörper nach einem der Ansprüche 1 bis 5, d a - d u r c h   g e k e n n z e i c h n e t , daß im Boden jeder Nut (3) ein elastisches Band (8) einliegt, an das der Rücken der Feder (4) zur Anlage gelangt.

8. Hohlkörper nach einem der Ansprüche 1 bis 7, d a - d u r c h   g e k e n n z e i c h n e t , daß Nut (3) und/oder Feder (4) von Profilen (17, 18) gebildet werden, die an den Stirnseiten der Elemente (1, 2) ein- oder ansetzbar sind.

9. Hohlkörper nach Anspruch 8, d a d u r c h   g e - k e n n z e i c h n e t , daß die Profile (17, 18) durch Nut (19) und Feder (20) in den Stirnseiten der Elemente (1, 2) befestigbar sind.

10. Hohlkörper nach Anspruch 8 oder 9, d a d u r c h g e k e n n z e i c h n e t , daß mindestens eines der Profile (17, 18) aus elastischem Material, insbesondere Kunststoff, besteht.

11. Hohlkörper nach einem der Ansprüche 1 bis 10, d a - d u r c h   g e k e n n z e i c h n e t , daß die Elemente aus mehreren Schalen, insbesondere Halbschalen, zusammensetzbar sind.

12. Hohlkörper nach Anspruch 11, d a d u r c h   g e - k e n n z e i c h n e t , daß im Bereich der Ecken der Schalen die Feder einer Stirnfläche in eine Nut einer Trennfläche und die Nut einer Stirnfläche in eine Feder einer Trennfläche übergeht.

13. Hohlkörper nach Anspruch 12, d a d u r c h   g e -
k e n n z e i c h n e t , daß diese Übergänge in
einem Winkel von 45 Grad zu den Nuten und Federn
verlaufen.

14. Hohlkörper nach einem der Ansprüche 1 bis 13, d a -
d u r c h   g e k e n n z e i c h n e t , daß die
Elemente derart zusammengesetzt sind, daß die Trennfugen eines Elementes zu denen des anliegenden Elementes versetzt angeordnet sind.

15. Hohlkörper nach einem der Ansprüche 1 bis 16, d a -
d u r c h   g e k e n n z e i c h n e t , daß die
Nuten (3) und Federn (4) als auch die Flansche
(9a, 9b) von auf die Stirnseiten der Rohre (1, 2)
aufgesetzten Ringen (27, 28) oder Ringsegmenten gebildet werden.

16. Hohlkörper nach Anspruch 15, d a d u r c h   g e -
k e n n z e i c h n e t , daß die Ringe (27, 28)
oder Ringsegmente die Rohre (1, 2) seitlich umfassen
und sägezahnförmig (32, 37) an den Rohrmänteln befestigt sind.

17. Hohlkörper nach Anspruch 16, d a d u r c h   g e -
k e n n z e i c h n e t , daß der am Ring (27, 28)
oder Ringsegment angeordnete, insbesondere ringförmige Sägezahn hinterschnitten ist und in einer entsprechend geformten Nut im Rohrmantel einrastet.

Fig.1

Fig.2

0022248

**Fig.3**

**Fig.4**

2/4

0022248

# Fig. 5

# Fig. 6

21a 21b 22

23 25 26 24 3/4

Fig.7

120°

2

3

4

Fig.8

2

3

4

Fig.9

2

4

3

Fig.10

2

31

27

32

34

8

9a

9b

4

28

37

38

1

4/4

0022248

| | | | | Nummer der Anmeldung |
|---|---|---|---|---|

## EUROPÄISCHER RECHERCHENBERICHT

EP 80103779.7

| EINSCHLÄGIGE DOKUMENTE | | | KLASSIFIKATION DER ANMELDUNG (Int.Cl ³) |
|---|---|---|---|
| Kategorie | Kennzeichnung des Dokuments mit Angabe, soweit erforderlich, der maßgeblichen Teile | betrifft Anspruch | |
| X | US - A - 4 139 223 (LLOYD W. CLEMENTS) <br> + Gesamt + <br> -- | 1,2,4, 7,10 | F 16 L 23/04 <br> F 16 B 11/00 <br> E 21 D 11/38 |
| X | DE - A - 1 708 690 (ZÜBLIN AG) <br> + Gesamt + <br> -- | 1,6,7, 8,9,10 | |
| | DE - A1 - 2 519 471 (PHOENIX GUMMI WERKE) <br> + Gesamt + <br> -- | 1,6,11 | |
| | DE - A - 2 247 556 (FUNKE PETER) <br> + Gesamt + <br> -- | 1,6 | RECHERCHIERTE SACHGEBIETE (Int. Cl ³) <br> F 16 L 13/00 <br> F 16 L 17/00 <br> F 16 L 19/00 <br> F 16 L 21/00 |
| | DE - A - 2 326 628 (LOCKHEED AIR-CRAFT CORPORATION) <br> + Gesamt + <br> -- | 5 | F 16 L 23/00 <br> F 16 L 25/00 <br> F 16 L 27/00 <br> F 16 L 37/00 <br> F 16 B 2/00 <br> F 16 B 7/00 |
| A | DE - A1 - 2 553 934 (DEUTSCHE SEMPERIT GMBH) <br> + Gesamt + <br> -- | 11 | F 16 B 11/00 <br> F 21 D 11/00 <br> F 16 S 1/00 |
| A | FR - A1 - 2 234 452 (BETHLEHEM STEEL CORPORATION) <br> + Gesamt + <br> -- | 1 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur |
| D | EP - A1 - 1 836 (SCHAEFER RUDOLF) <br> + Gesamt + <br> ---- | 1 | T. der Erfindung zugrunde liegende Theorien oder Grundsätze <br> E. kollidierende Anmeldung <br> D. in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patent-familie, übereinstimmendes Dokument |

| Recherchenort | Abschlußdatum der Recherche | Prüfer |
|---|---|---|
| WIEN | 09-09-1980 | SCHUGANICH |

EPA form 1503.1   06.78